# EUROPEAN PATENT SPECIFICATION

(11) **EP 3 420 278 B1**
(45) Date of publication and mention of the grant of the patent: **25.03.2020**
(21) Application number: 17780199.0
(22) Date of filing: 27.02.2017
(51) Int. Cl.: F23G 5/08, F23G 5/24, F23G 5/027

(54) **PLASMA REACTOR, AND WASTE PROCESSING SYSTEM AND METHOD WITH SUCH REACTOR**
PLASMAREAKTOR UND ABFALLVERARBEITUNGSSYSTEM UND VERFAHREN MIT SOLCH EINEM REAKTOR
RÉACTEUR À PLASMA, AINSI QUE SYSTÈME ET PROCÉDÉ DE TRAITEMENT DE DÉCHETS AVEC LEDIT RÉACTEUR

(30) Priority: 26.02.2016 HU 1600142
(43) Date of publication of application: 02.01.2019
(73) Proprietor: Mészáros, Péter Ferenc, 3232 Gyöngyös (HU); Mészárosné Drizner, Rita Mária, 3232 Gyöngyös (HU); Mészáros, Péter Balázs, 3200 Gyöngyös (HU); Mészáros, Máté Zsolt, 1065 Budapest (HU); Mészáros, Márk Imre, 1065 Budapest (HU)
(72) Inventor: Mészáros, Péter Ferenc, 3232 Gyöngyös (HU); Mészárosné Drizner, Rita Mária, 3232 Gyöngyös (HU); Mészáros, Péter Balázs, 3200 Gyöngyös (HU); Mészáros, Máté Zsolt, 1065 Budapest (HU); Mészáros, Márk Imre, 1065 Budapest (HU)
(74) Representative: Danubia Patent & Law Office LLC
(86) International application number: PCT/HU2017/050005
(87) International publication number: WO 2017/212301

(56) References cited:
- US-A1- 2007 266 633
- US-A1- 2012 070 347

## Description

The present invention generally relates to the treatment of wastes and byproducts, primarily combustion and pyrolysis residues by thermal plasma. In particular, the invention is directed to plasma reactors, particularly to a plasma reactor suitable for converting wastes and byproducts (from now on: waste materials) to one or more predefined (preliminarily determined/desired) end products. The invention also relates to waste processing systems comprising such a plasma reactor and waste processing methods performed by such a plasma reactor.

Nowadays, one of the greatest problems of humanity is the creation of wastes that takes place continuously and with an ever growing rate. Wastes and/or byproducts whose recycling is not yet solved or not solvable at all are created in a number of fields of everyday life. Consequently, the safe storage and treatment of greater and greater amounts of waste have to be taken care of. Moreover, part of this waste is considered to be hazardous waste (such as e.g. industrial wastes containing heavy metals, radioactive wastes, hospital wastes, various burning and pyrolysis residues, etc.), thus its treatment requires high care and complying with strict safety regulations. Wastes, however, comprise a number of valuable materials (without completeness e.g. metals, particularly rare earth metals) and a great amount of bound energy as well, thus it would be worth recycling them as fully as possible. Consequently, it is an important view-point when the treatment of wastes and the disposal of hazardous wastes are about that they may be considered as secondary energy sources and/or raw materials, and a significant part of their constituents could be converted into marketable products by selecting suitable technologies. Therefore, the applied waste treatment technology itself could be made much more economic, while reducing the environmental load.

The efficiency of thermal conversion of wastes is a function of essentially three factors: temperature, duration of time spent at a certain temperature and mixing conditions. Thermal plasmas, particularly high temperature thermal plasmas are highly promising for waste treatment/processing due to their advantageous physical and chemical properties, because they have sufficiently high energy to decompose the treated material and also provide sufficiently rapid heating and intense mixing of the material. As a result, thermal plasmas can be used for processing even wastes not degrading (or degrading to a small extent only) in conventional waste incinerators that operate at a temperature of 300-1200°C and with an oxidizing atmosphere. In order to prevent emission of polluting combustion products, cleaning of the gas phase(s) formed, e.g. the tail gases discharged to the environment, is a key feature of every incineration technology. As the gas turnover of plasma reactors is significantly lower than that of conventional incinerating apparatuses, significantly less tail gas has to be treated and cleaned in the case of plasma reactors.

Utilization of thermal plasmas generally requires specifically designed reactors, the so called plasma reactors. Nowadays such reactors are already known.

For example, Canadian Publication Pamphlet No. CA-2,714,911 A1 discloses a method for gasifying carbonaceous wastes (municipal waste, biomass, sewage sludge, etc.) at the relatively low temperature of at most 1450°C in a horizontally oriented gasifier, as well as a method for the subsequent conversion of the thus obtained gas and an apparatus for carrying out said method. One or more transferred arc and blown arc plasma torches are equally used for the conversion. In said document, making use of plasma torches for different purposes, namely for converting the generated synthesis gas and melting the residual slag are also disclosed. According to said document, the slag can be melted by e.g. directing the blown arc plasma torch directly onto the slag, thus the metallic and non-metallic constituents of said slag separate from each other due to the difference in the specific weights, which provides the opportunity to separately tap the metallic constituents (that is, in pure metallic form). Optionally, the apparatus comprises an additional heating element for keeping the molten solid material in molten state. To bind the harmful constituents of the gases and to achieve the desired gas composition, additives, such as sodium, air (i.e. gaseous oxygen) and water vapor are added. On the basis of a regular analysis and evaluation of the composition of the gases obtained, the ratio and the amount of the supplied feedstock and additives are changed and thus a substance at the output is just provided with the desired parameters as is planned. According to the description, by suitably selecting the gas used in the plasma torches, a process management of neutral, reductive or oxidative nature can be equally accomplished. Gas analysis is carried out at multiple locations in the reaction volume: to monitor the homogeneity of the synthesis gas produced, on the one hand, and to rule out measurement errors and to detect malfunction of the measuring instruments on the other hand. In the apparatus, additives can be equally fed at the location of melting solid residues and at the location of producing the synthesis gas (i.e. at more than one process management points). The system for carrying out the processing method may be constructed in a modular manner; by making use of such a modular embodiment, a converting plant of arbitrarily increasable processing capacity may be built.

International Publication Pamphlet No. WO 2005/115065 A2 discloses a plasma torch and the use thereof for matter conversion. The specialty of the disclosed plasma torch is that instead of air/gaseous nitrogen, metallic vapor, preferably some alkali metal or alkali earth metal vapor is used as the arcing substance. This way the energy transfer between the plasma and the material to be melted is more efficient and a process management of reductive nature may be realized. A possible field of application of said plasma torch having metallic vapor arc is the extraction of various metal contents (e.g. iron, titanium, copper, gold content) of the metal containing minerals/ores or refuse dumps at temperatures - depending on the type of metal to be extracted - between at least about 1200°C and more than 2000°C, wherein molten matter is optionally collected in the graphite-lined storage part constituting the bottom zone of a melting furnace that forms the reaction volume. The materials (particularly metals) separating by specific weight are tapped separately or allow to cool and solidify. One of the end products of the matter conversion performed by said metallic vapor, preferably sodium vapor arced plasma torch is NaOH that is of high economic importance. Use of the metallic vapor arced plasma torch at ultrahigh temperatures (between about 10000°C and 25000°C) is also mentioned in said document.

Japanese Patent No. JP-4,397,033 B2 discloses a mobile waste processing apparatus, which is - when arranged on a road or railway vehicle - suitable for collecting and disposing ash comprising hazardous materials. The apparatus as a whole is installed in a single standard 40-feet container, thus it can be arranged and operated on the semi-trailer of a truck or on a single railway car. In the waste treatment apparatus, a transferred arc plasma torch with metal electrode and another one with graphite electrode are operated in the same reaction volume and with the same purpose; the two plasma torches can be moved toward and apart from each other. In order to achieve maximal efficiency, the power output of the plasma torches and the feeding rate of the material to be processed are kept under continuous control. A backplate electrode for the graphite and the metal electrodes of said plasma torches are provided by an extended lower electrode located at the bottom of the reaction volume, wherein to prevent adhesion of the material to be processed, said electrode is covered by a layer of molten metal.

International Publication Pamphlet No. WO 2011/106895 A1 discloses a multistage apparatus for converting carbonaceous feedstock into synthesis gas and slag at a temperature of at least about 1100°C and a method; said apparatus is made up of a primary processing unit, a secondary processing unit, a melting unit and a gas reforming unit. The heating device(s) used in the apparatus is/are one or more commercially available blown arc or transferred arc plasma torches with conventional arc forming media; said plasma torches have got a power output between 100 kW and 6 MW. The applied plasma torches may substantially be arranged in the same zone of the reaction volume or at different zones thereof located relatively distant from each other (e.g. at the bottom and top of the reaction volume). The H₂:CO ratio, flow rate and temperature of the produced end product synthesis gas, as well as the temperature and pressure prevailing in the reaction volume are continuously monitored via signals of suitable sensors, and if necessary, adjusted to the desired/predetermined values in an automated way by means of operating suitable control mechanisms.

US Publication Pamphlet No. US2009/0116532 A1 discloses a reactor vessel for plasma gasification. The reactor vessel comprises a multilayer wall and delimits a reaction volume. The reactor vessel is equipped with a gas outlet arranged on the top, a waste supply inlet arranged laterally near the bottom, as well as slag and melt outlets formed at the bottom of the reactor vessel. The cross section of the reactor vessel changes between the waste supply inlet and the gas outlet, preferably said cross-section widens in the direction of the gas outlet.

A common drawback of the aforementioned solutions is that the temperature in the internal space of the reactors used therein is not uniform. This may lead to the formation of dead spaces of lower temperatures within the reactors and material depositions on the inner wall of the reactors, in the cooler regions thereof, which are detrimental to the operation and lifetime of the reactors.

US Publication Pamphlet Nos. US2012/070347 A1 and US2007/266633 A1 both disclose waste processing methods to convert waste material by thermal plasma into desired end products.

The object of the present invention, in general, is to provide a plasma reactor for treating waste materials with thermal plasma that is suitable for - as a starting point of a complex technological process - decomposing waste materials to less hazardous materials and/or extracting valuable constituents from the volatile or solid decomposition products of said waste materials with high efficiency.

A further object of the invention is to provide a plasma reactor for treating waste materials with thermal plasma, in which the conversion of waste materials with exceptionally high efficiency is stable both physically and chemically and takes place into one or more end products as desired in such a way that the hazardous components cannot escape into the environment from the thus obtained end products even under extreme conditions.

A yet further object of the invention is to provide a plasma reactor, which is capable of separating and decomposing organic and inorganic (primarily metallic) constituents of the supplied waste material simultaneously through thermal decomposition reactions taking place in the thermal plasma that builds up in its reaction volume, as well as disposing said constituents, and also preparing the constituents for being used in further steps of the technological process.

A yet further object of the invention is to provide a plasma reactor, wherein the additives required for the process control can be easily and selectively fed in real time and substantially at the point/into the region of the reaction volume where they are actually to be used after having been introduced.

A further object of the invention is to provide a plasma reactor, wherein to ensure a solid control over the complete process, the thermal decomposition reactions taking place in the reaction volume and the intermediate products and/or end products produced thereby can be monitored substantially in real time.

A yet further object of the invention is to provide a plasma reactor, wherein - in operation - a homogenous and high temperature, preferably of at least about 3000°C, more preferably of about 3000-4000°C can be maintained in the entire cross-section of the reaction volume at least in a region of the reaction volume.

A yet further object of the invention is to provide a complex waste processing system and technological process, wherein nearly 100% recycling of the waste material supplied into the reaction volume of a plasma reactor according to the invention is achieved.

A yet further object of the invention is to provide a plasma reactor, as well as a waste processing system and method, which provide a suitable alternative for the treatment of combustion- and pyrolysis residues against their deposition to landfills. In this manner, both the plasma reactor according the invention and the waste processing system and method according to the invention efficiently contribute to the alleviation of the problem presented by the deposition of combustion- and pyrolysis residues.

In our studies we have come to the conclusion that by applying a suitably selected process control and process regulation, and by matching the plasma reactor (the geometry of the reaction volume) to the thermal decomposition reaction, the waste materials considered as secondary energy sources and/or raw materials can be almost entirely converted to marketable product (i.e. one or more end products as planned) if production of the reusable end products is performed by the waste processing technological process applied in a preliminarily devised manner. Accordingly, as part of "performing in preliminarily devised manner", the thermal degradation is carried out by thermal plasma at a temperature of at least about 3000°C, preferably about 3000-4000°C, additives being of importance in the production of the end products are at least partially provided within the thermal plasma itself that is used for the thermal decomposition of the waste materials, the thermal plasma used is expanded to substantially the entire cross-section of the reaction volume available for the necessary/performed reaction(s), and the processes taking place in the plasma reactor are continuously monitored by sensors arranged at certain points of the reaction volume and if the signals measured by the sensors differ from the anticipated/predefined values, a substantially real-time intervention is performed in the plasma reactor by means of changing the power input into the reaction volume of the plasma reactor and/or modifying the composition of the thermal plasma within the reaction volume by varying the amount of additives introduced into the reaction volume.

Consequently, the plasma reactor is formed with a reaction volume of limited size and cylindrical symmetry, on the one hand, wherein the reaction volume in cross-section is substantially uniform along its entire height. On the other hand, instead of using a single high-powered and local plasma torch, there are preferably more than one plasma torches of different types used, the individual powers of the torches applied are typically lower than the power of a single plasma torch that would be theoretically necessary for generating thermal plasma with a temperature of at least about 3000°C, preferably about 3000 to 4000°C. Furthermore, such arc forming material(s) is/are used to form the arcs of the plasma torches applied that comprise(s) - at least partially - the additives necessary for the production of the devised end products. Homogenous and constant temperature may be achieved by making use of more than one plasma torches in a significantly easier manner (in comparison to the case of a single high-powered plasma torch). Moreover, in the case of using more than one plasma torches, it becomes possible to apply plasma torches of different arc forming materials, and thus the thermal decomposition reactions may be shifted toward the production of the devised end products by means of setting and adjusting the composition of the thermal plasma by the plasma torches used (via e.g. real-time interventions performed in response to the signals of the sensors arranged within the reaction volume of the plasma reactor.

It was found that limiting the reaction volume in size and constructing the inner surface delimiting it in a cylindrically symmetric way with no projections/recesses thereon and featureless contribute significantly to the continuous maintainability of a high, at least about 3000°C temperature in the entire cross-section of the reaction volume in certain regions thereof. In a preferred exemplary embodiment of the plasma reactor according to the invention, said high temperature, which is constant in cross-section, is provided by at least two blown arc plasma torches using preferably different working media for the arc forming, wherein said plasma torches are arranged at different positions of the plasma reactor.

Particularly, in a preferred embodiment of the plasma reactor according to the invention, preferentially three plasma torches of substantially equal power output (about 100 kW each) are used arranged at three different points of the plasma reactor. The type and arc forming media of said plasma torches are preferably selected in such a way that when said plasma torches operate, processes resulting in the production of the end products devised are in majority within the thermal plasmas generated. To this end, one of the plasma torches is provided in the form of a plasma torch which uses e.g. water vapor as the arc forming medium that is of particular preference in the processing of combustion-and pyrolysis residues. It is hereby noted that the usage of different types of plasma torches together significantly improves the conditions for thermal degradation, because - in general - a blown arc plasma torch may be used advantageously to e.g. evaporate/gasify the supplied waste materials, while a transferred arc plasma torch may be used advantageously to e.g. facilitate material mixing in the thermal plasma. Using different types of plasma torches together within the same reaction volume also ensures the separation of waste materials comprising both organic and inorganic (primarily metallic) constituents into metallic phase/slag phase/gas phase.

A particularly preferred embodiment of the plasma reactor according to the invention is provided with three plasma torches of different power outputs; the plasma torches belong to different plasma torch types and at least one of them makes use of an arc forming medium that provides an additive being preferred for the production of the end product devised.

The object of the invention related to the aspect of providing a plasma reactor is achieved by developing the plasma reactor according to claim 1. Preferred exemplary embodiments of the plasma reactor according to the invention are set forth in claims 2 to 13. The object related to the aspect of providing a waste processing system is achieved by the waste processing system according to claim 14. The further object related to the aspect of providing a method for waste processing is achieved by the method of claim 15.

In what follows, the invention and its further advantages will be described in detail with reference to the accompanying drawings, wherein
- Figure 1 is a schematic perspective view of a preferred exemplary embodiment of the plasma reactor according to the invention;
- Figure 2A is a longitudinal sectional view of the plasma reactor illustrated in Figure 1;
- Figure 2B shows the plasma reactor of Figure 1 in sectional views ***a-a*** and ***b-b*** in a single figure;
- Figure 2C illustrates sectional views *c-c* and *d-d* in accordance with Figure 2B of the plasma reactor shown in Figure 1, i.e. a longitudinal sectional exploded partial view of the plasma reactor with its metal processing unit being rotated out of plane;
- Figure 3 illustrates schematically a waste treating stage of the waste processing system according to the invention, formed preferably by a combination of the plasma reactor according to the invention and a waste feeder; the figure also shows the separation and processing of the waste comprising both organic and inorganic (metallic) constituents as performed by the plasma reactor; and
- Figure 4 is a block diagram of a preferred embodiment of the waste processing system and technological process according to the invention for a complete processing of waste comprising both organic and inorganic (metallic) constituents.

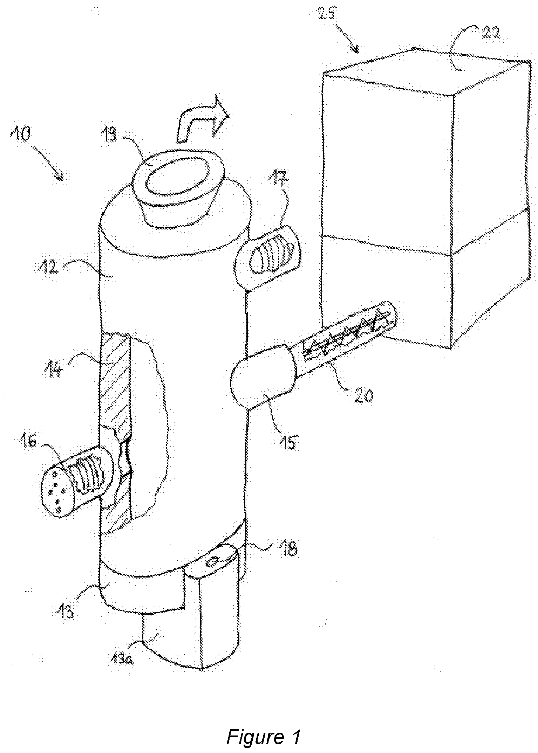

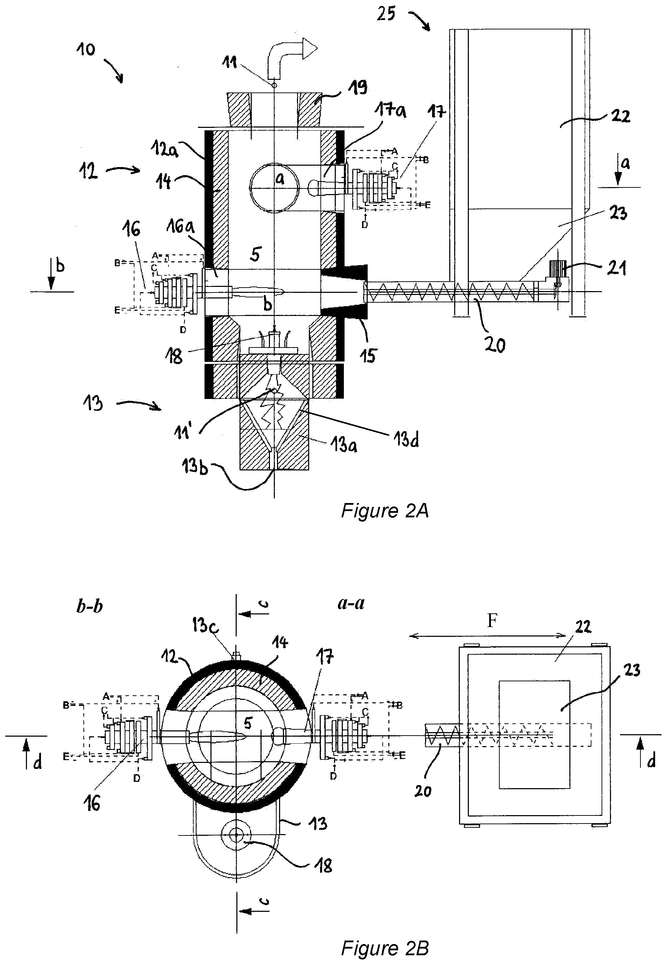

The plasma reactor 10 according to the invention is constructed as a shaft furnace 12 lined with a flame resistant walling 14, to which - in the embodiment shown in Figure 1 - preferably three plasma torches 16, 17, 18 (or plasma burners) may be attached. The furnace 12 comprises an outer wall 12a. As shown in Figures 2A to 2C, a reaction volume 5 is formed inside the furnace 12, within the flame resistant walling 14. The reaction volume 5 is formed by practically a cylindrically shaped shaft with preferably a height of about 1500 mm and a width of about 600 mm, wherein said shaft is laterally delimited by the walling 14 and opens into a gas outlet port 19 at one end thereof (preferably, at the upper end, when the plasma reactor 10 operates), while it opens into a melt collecting crucible 13a at the other end thereof (preferably, at the bottom end, when the plasma reactor 10 is in operation). The melt collecting crucible 13a forms a part of a melt treatment unit 13; the reaction volume 5 is delimited at its bottom end by the melt treatment unit 13. When the plasma reactor 10 is in operation, the flame resistant walling 14, the gas outlet port 19 and the melt treatment unit 13 surround the reaction volume in a practically airtight manner; thus ambient air and as part of that, nitrogen (N₂) cannot accidentally enter the reaction volume 5.

There are torch receiving openings 16a, 17a provided in the furnace 12 through the outer wall 12a and the flame resistant walling 14 thereof. The reaction volume 5 is preferably configured as a volume of cylindrical symmetry, i.e. the surface of the flame resistant walling 14 facing the reaction volume is substantially featureless and - apart from the torch receiving openings 16a, 17a - contains neither projections nor recesses. As we found, such a geometric construction of the plasma reactor 10 makes it significantly easier to provide (i) a homogenous temperature distribution along the entire cross-section of the reaction volume 5 in the desired region thereof, and (ii) an expansion of the thermal plasmas generated by said plasma torches 16, 17 substantially to the entire cross-section of the reaction volume 5 in respective regions of the reaction volume 5 in the operational state, i.e. when the plasma reactor 10 operates. Consequently, no so-called dead spaces will form within the reaction volume 5.

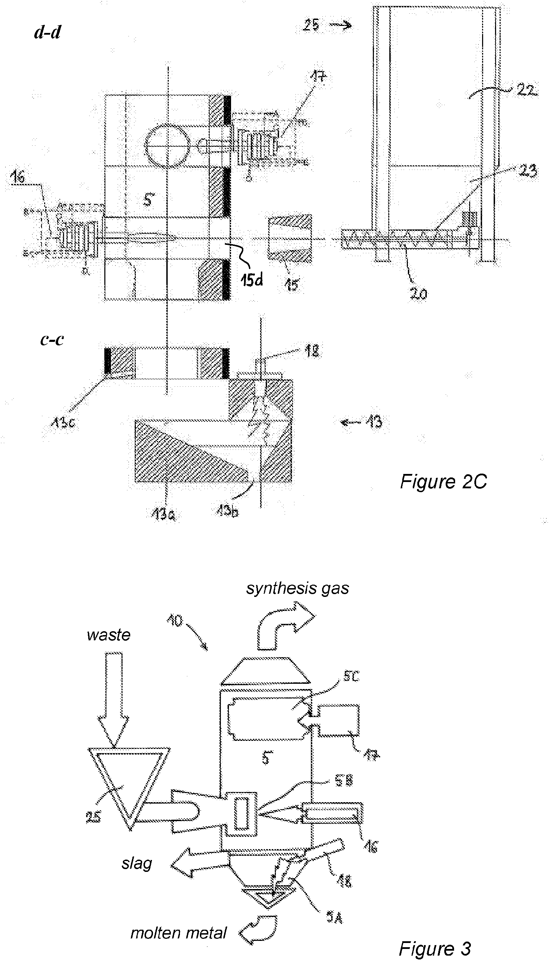

The two plasma torches 16, 17 applied in the embodiment of the plasma reactor 10 illustrated in Figures 1 and 2 are fitted into the torch receiving openings 16a, 17a in an airtight manner providing sealing in such a way that the arc forming parts of said torches extend into the reaction volume 5, while their parts carrying electronic/control units A/E, additive supply inlets C, arc forming material supply inlets D and electric power supply connections B are arranged substantially on the outer side the furnace 12, and thus are easily accessible. There is one plasma torch 16, 17 in each torch receiving openings 16a, 17a. When using more than two such plasma torches, there are provided more torch receiving openings in the outer wall 12a of the furnace 12 and the flame resistant walling 14. The plasma torches of same function are preferably provided in torch receiving openings that are arranged at the same height around the circumference of the furnace 12.

Plasma torch 18 is mounted in the melt treatment unit 13 in such a way that its arc forming part faces the melt collecting crucible 13a, while its part that carries its electronic/control units, its arc forming material supply inlet and its electric power supply connections are located substantially at the outer side of the unit 13, being thus easily accessible. The melt treatment unit 13 is equipped with a slag tapping port 13c and a port 13b for tapping molten metal. Preferably, the slag tapping port 13c is arranged at or near the upper edge of the melt collecting crucible 13a, while the port 13b for tapping molten metal is arranged at the bottom of the melt collecting crucible 13a, preferably at the lowest part thereof.

The plasma torches 16, 17, 18 are commercially available plasma torches that are energized by direct current (DC) or alternating current (AC), and thus are known to a person skilled in the art. The plasma torches 16, 17, 18 can either be blown arc or transferred arc plasma torches. Moreover, any suitable material, thus e.g. argon (Ar), oxygen (O₂), carbon dioxide, water vapor (H₂O), etc. or, optionally, even a vapor of a metal can be used as the working medium for arc forming in said plasma torches 16, 17, 18.

In the embodiment of the plasma reactor 10 illustrated in Figure 2A, the plasma torches 16, 17 are provided by blown arc plasma torches, while the plasma torch 18 is a transferred arc plasma torch. In the case of the latter, the body electrode of the plasma torch 18 is a liner element 13d preferably abutting on the inner surface of the melt collecting crucible 13a, which is made preferably of graphite. The liner element 13d is optionally provided at the lowest point thereof with an outlet communicating with the port 13b for tapping molten metal, but this is not necessary.

Waste supply of the plasma reactor 10 is provided by a continuous operation waste feeder 25. The waste material to be processed is fed/pushed into the plasma reactor 10 by an electric motor 21 driven feeding mechanism 20 from a silo 22 (the volume of which is about 2 m³ in a preferred embodiment) of said waste feeder 25, preferably via a hopper 23. Said feeding mechanism 20 is preferably a screw type or a pneumatic (piston-type) feeding mechanism. Preferably, one or more mixing and/or comminuting device(s) (not shown in the Figures) is/are provided in the silo 22 and/or in the hopper 23 for homogenizing and continuously loosening of the waste material fed. The comminuting device is preferably provided by a disc/blade type masticator which breaks the incoming waste into pieces of at most 20-40 mm in size. The waste feeder 25 may be fixed relative to the plasma reactor 10, or it may be movable e.g. on rails, as is indicated by an arrow F in Figure 2B. The feeding mechanism 20 is connected with the reaction volume 5 via a fitting element 15 that is form-fitted into a through hole 15d penetrating the outer wall 12a and the flame resistant inner walling 14 of the furnace 12. The feeding mechanism 20 pushes the waste directly into the reaction volume 5 via the conical fitting element 15 that expands towards the reaction volume 5. The feeding mechanism 20 is releasably coupled with the fitting element 15, thus, if needed, it can be removed from the plasma reactor 10. The hole 15d and thus the feeding mechanism 20 as well are preferably located opposite to the torch holding opening 16a used for mounting the plasma torch 16, i.e. the hole 15d is at an angular position of 180° from said opening 16a, at a height substantially equal to the height of the opening 16a in the reaction volume 5 measured from the first edge of the melt collecting unit 13 (i.e. it occupies a position opposite to the latter). As a result of this geometrical configuration, the feeding mechanism 20 pushes the waste material to be processed directly into the thermal plasma generated by the plasma torch 16, which greatly facilitates an instantaneous evaporation/gasification and thermal degradation of the incoming waste material due to thermal plasma. An arrangement of the hole 15a and the opening 16a at an angle of at least 150° (at any side of the aforementioned opposite position) is also considered preferable, but in such a case, the efficiency of gasification is slightly reduced compared to the efficiency of gasification achieved for said opposite arrangement.

The torch receiving opening 17a - or if more than one plasma torches 17 are used, each of the openings 17a - is provided between the opening 16a receiving the plasma torch 16 and the gas outlet port 19 in the outer wall 12a and the heat resistant walling 14 of the furnace 12.

As shown in Figure 2A, to monitor and measure physical and/or chemical conditions (such as pressure, temperature, gas composition, carbon monoxide (CO) level, CO₂ level, etc.) prevailing at said locations of the reaction volume 5 from time to time, one or more sensors 11, 11' are arranged at one or more locations of the reaction volume 5 of the plasma reactor 10 according to the invention. One of the sensors used is preferably provided by a sensor 11 arranged in or near the gas outlet port 19. A further sensor 11' may be arranged e.g. at the top portion of the melt collecting crucible 13a, preferably near the slag tapping port 13c. The sensors 11, 11' are in data communication connection with a central data collecting and control unit (not shown in the Figures), preferably a computer, associated with the plasma reactor 10. Said central data collecting and control unit is also in data communication connection with the waste feeder 25 and/or the feeding mechanism 20, and the electronic/control units A/E of the plasma torches 16, 17, 18; said connections can equally be wired or wireless connections. The central data collecting and control unit outputs suitable control signals based on the measurement data (e.g. pressure, temperature, instantaneous gas composition) provided by the sensors 11, 11', upon evaluating and, preferably, comparing these data to values determined in respect of the end product(s) devised/desired and depending on the result of said comparison; by appropriate interventions, said control signals serve to be used for controlling the operation of the units being in data communication connection, thus, in particular, e.g. the rate of waste feeding and/or the operation of the plasma torches 16, 17, 18, that is, e.g. their supplies of additive material, preferably the supply rate of additive or the power output by the plasma torches 16, 17, 18. As processing/evaluating the measurement data and determining the manner of intervention, as well as performing the actual intervention and the emergence of changes in the processes that undergo within the reaction volume 5 due to the intervention (i.e. response of the system), and subsequent processing and evaluation of results obtained in a next measurement (i.e. a full control cycle) is not instantaneous, but requires a finite time period to take place, the control process of the plasma reactor 10 according to the invention may be considered as a pulsating type of control.

In a particularly preferred embodiment of the plasma reactor 10, the plasma torch 16 is provided by a plasma torch that has a power output of 110 kW, uses an arc forming medium selected from oxygen, carbon dioxide and a mixture thereof, is equipped with AC energization and has got a blown arc. In the same embodiment, the plasma torch 17 is provided by a blown arc plasma torch that has a power output of 110 kW, uses water vapor as the arc forming medium, and is equipped with AC energization. Furthermore, the plasma torch 18 is provided by a transferred arc plasma torch that has a power output of 65 kW, uses an arc forming medium selected from argon, oxygen and any mixtures thereof, and is equipped with DC energization. This particularly preferred embodiment of the plasma reactor 10 is suitable for producing metals, slag and synthesis gas by processing various waste materials, and thus it converts initial waste material in a devised manner into desired end product(s) to be reused.

Figure 3 shows a combination of the plasma reactor 10 according to the invention and a waste feeder 25, which substantially corresponds to a preferred exemplary embodiment of a waste processing stage of a waste processing system according to the invention to be described in detail in what follows. As Figure 3 suggests, the reaction volume 5 of the plasma reactor 10 can be divided into three imaginary regions: a melt treatment region 5A, a waste feeding and evaporation (gasification) region 5B and a gaseous material treatment region 5C. The waste feeder 25 feeds the waste to be processed (comprising here both organic and inorganic constituents) into the region 5B of the reaction volume 5 by the aforementioned feeding mechanism. Said division is introduced substantially in harmony with the actual locations of the various processes that takes place in the plasma reactor 10, but obviously said regions 5A, 5B, 5C do not have strict physical boundaries.

In region 5B, thermal decomposition and evaporation/gasification of the waste fed by the feeding mechanism from the waste feeder 25 is performed by the plasma torch 16 via energy input, optionally also supplying oxygen and heating to a temperature of at least 3000°C by said plasma torch 16. During this, gaseous materials are brought into region 5C by a depression effect of the furnace 12, while the heavier slag materials/metals pass into region 5A under gravity.

In region 5A, inorganic constituents of the waste material are smelted/melted by the energy supplied by the plasma torch 18 and then are extracted from the plasma reactor 10 separately as molten slag and metal through the associated ports - the slag tapping port 13c and the port 13b for tapping molten metal, respectively, shown in Figure 2C. If it is required, the energy input by said plasma torch 18 also keeps the metallic constituents in molten state. If there are several types of metals present in the waste material (e.g. when processing used electronic components), instead of extracting as molten metal, an extraction can be equally performed in a layered form (based on the specific weights of the metals) as described in detail in International Publication Pamphlet No. WO 2005/115065 A2; in such a case, the solidified molten metal is removed from the plasma reactor 10 preferably together with the graphite liner element 13d or together with a similar insert arranged preliminarily in the crucible 13a. It is hereby noted, that the slag can be extracted in the form of slag fibers (slag wool) if a melt spinning machine is connected to the slag tapping port 13c, and by further processing of said fibers, e.g. thermal insulation elements can be obtained. The melt spinning machine used is preferably a centrifugal disc-type melt spinning machine.

In region 5C, the plasma phase material flowing upwards, that has previously (in region 5B) been heated and subjected to thermal decomposition, is converted by the plasma torch 17 using water vapor working medium into synthesis gas (CO:H₂) substantially in the entire cross-section of the reaction volume 5 and without the addition of air (and thus of N₂). To this end, water vapor is added (oxygen introduction) to the plasma phase material - in an amount dependent on its carbon content - by the working medium of the plasma torch 17. The amount of water vapor to be fed is determined and controlled/adjusted on the basis of measurement results acquired by the sensor 11; at this point of the furnace 12, water vapor is introduced only in such an amount that is just sufficient to oxidize and thereby to convert substantially the entire carbon content in region 5C into CO. To put this differently, water vapor is introduced into the reaction volume 5 in a stoichiometric amount, i.e. during operation of the plasma reactor 10, based on the measurement data of the sensor 11, such interventions are effected within the reaction volume 5 in subsequent control cycles that aim at maintaining the continuous and stable stoichiometric C:O ratio. Such interventions are, without claiming completeness, e.g. an adequate modification of the waste feeding rate of the feeding mechanism 20, an increase/decrease in the power output and/or in the amount of the working medium of the plasma torch 16 (or of the additive materials introduced optionally with the plasma torch 16), an increase/decrease in the power output and/or in the amount of the working medium (water vapor) of the plasma torch 17. After effecting a treatment by thermal plasma generated by the plasma torch 17, the synthesis gas obtained in the conversion procedure, as well as the vapors of materials having lower boiling temperatures (about 2500-2700°C) and obtained in the thermal decomposition of the introduced waste material, and thus optionally metallic vapors as well, are discharged through the gas outlet port 19.

It is hereby noted that in those embodiments of the plasma reactor 10 that merely serve to process inorganic waste material, the (one or more) plasma torch 17 may be omitted. However, in these cases the plasma reactor 10 and the technological process to be described in detail in what follows is significantly less economical.

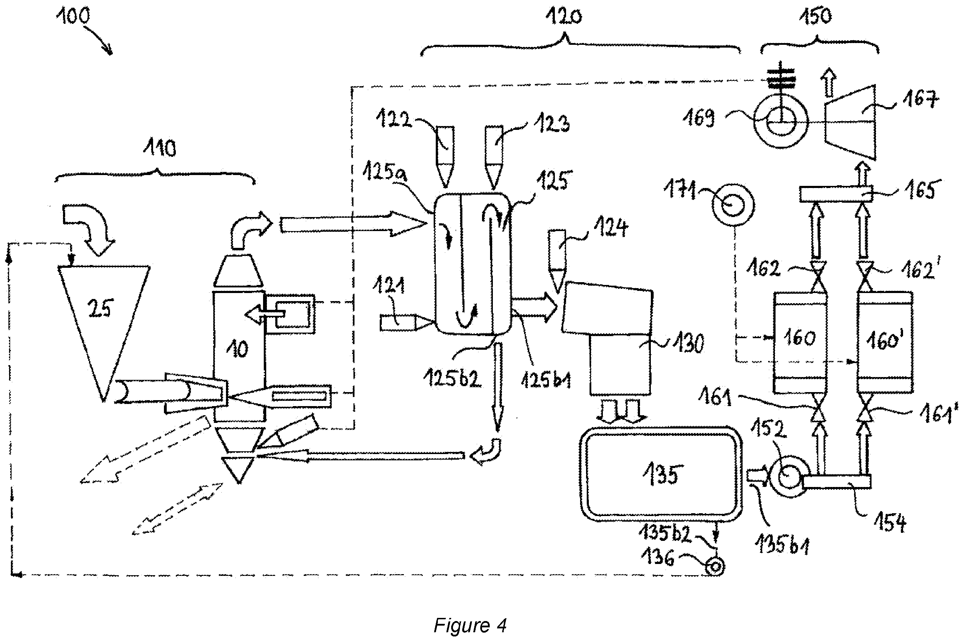

Figure 4 shows a preferred exemplary embodiment of the waste processing and recovering system 100 according to the invention. The system 100 substantially comprises a waste treatment stage 110, a gas treatment stage 120 and a gas utilization (processing) stage 150, wherein said stages are connected to each other - as needed - by pipelines for transporting materials and/or by electrical cables for transporting power, and by data communication links for transporting measurement data and control signals triggering the desired interventions into the operation of said system 100. The waste treatment stage 110 is practically corresponds to the arrangement shown in Figure 3, and hence, it is not described here in detail.

The gas treatment stage 120 is used for the adequate treatment (cooling, cleaning, etc.) of the gaseous material leaving the plasma reactor 10 (through the gas outlet port 19, see Figure 1) before the gaseous material is processed further. Said gaseous material is substantially a hot mixture (at a temperature of at least about 3000°C) of synthesis gas, metallic vapor and other contaminants. The gas treatment stage 120 basically comprises a secondary reaction volume 125, a quencher 130 and a scrubber unit 135, wherein the inlet of the secondary reaction volume 125 is connected to the gas outlet port of the plasma reactor 10, a first outlet 125b1 of the secondary reaction volume 125 opens into the quencher 130, an outlet 125b2 of the secondary reaction volume 125 is directed back into the melt collecting crucible 13a (see Figure 2A) of the melt treatment unit 13 of the plasma reactor 10, and the quencher 130 opens into the gas scrubber unit 135. A first outlet 135b1 of the gas scrubber unit 135 is connected to a compressor 152 that forms an inlet of the gas utilizing stage 150, while a second outlet 135b2 of the gas scrubber unit 135 is directed back to the inlet of the waste feeder 25 through a pump 136. Moreover, the secondary reaction volume 125 is provided - at different locations - with at least one reagent feeder 121, 122, 123, and the quencher 130 is provided with at least one reagent feeder 124. Each reagent feeder 121, 122, 123, 124 is in data communication connection with the central data collecting and control unit. Moreover, if needed, appropriate sensors are/may be arranged within the secondary reaction volume 125, in the quencher 130 and in the gas scrubber unit 135 in order to monitor the physical and chemical conditions inside said units and, optionally, to perform measurements required to decide on the application of one or more desired interventions; said sensors are in data communication connection with the central data collecting and control unit and/or directly with the reagent feeders 121, 122, 123, 124.

The secondary reaction volume 125 is used to perform a treatment aiming at disposing/cooling and converting the hot gas mixture leaving the plasma reactor 10 into desired end product(s). Said secondary reaction volume 125 is provided in the form of a reaction space with labyrinth configuration (ensuring slow or controlled cooling) having preferably three or more branches. In a preferred embodiment, the size of each branch is about 1500 mm x 300 mm. To achieve the desired output material composition and to complete the desired conversion processes, reagents can be added to the hot gas mixture by the reagent feeders 121, 122, 123 in harmony with a planned cooling rate of the gas mixture. As reagents, various additives or precipitants or alloying materials can be used; the reagents are chosen so as to avoid recombination processes that arise usually during cooling (and leading in most cases to the formation of harmful substances) as the consequence of chemical reactions taking place between the reagents added and some components of the gas mixture during the course of cooling of said gas mixture. In order to influence the cooling process, desired reagents are fed into the reaction volume 125 preferably in solid, liquid or vapor phase and, optionally, as compounds. In this way, temperature of the gas mixture guided through the secondary reaction volume 125 may be controlled by the heat requirement of the undergoing phase changes. As a result of the continuous heating, the gas mixture entering the reaction volume 125 at a temperature of nearly 3000°C is cooled down to about 1200°C by the time it reaches the outlets 125b1, 125b2 of the reaction volume 125. Thus, a significant portion of the metallic vapors and contaminants gets condensed in liquid phase and guided back into the melt treatment unit 13 of the plasma reactor 10 through the outlet 125b2. It should be here noted, that if the waste to be processed does not contain a metal which leaves the plasma reactor 10 together with the synthesis gas, i.e. its boiling point exceeds the temperature prevailing in the region 5B of the plasma reactor 10, the secondary reaction volume 125 may be omitted.

The cooled and significantly cleaned gas mixture is led from the secondary reaction volume 125 through the first outlet 125b1 to the stainless steel quencher 130, where it is subjected to quenching. To prevent or at least to reduce the recombination leading to the formation of harmful materials (e.g. dioxins, furans), before starting said quenching various reagents are added to the gas mixture by the reagent feeder 124. At this point of the technological process, it is particularly preferred to feed sodium into the quencher 130, because the chlorine (Cl) content of the gas mixture may be significantly reduced through the formation of NaCl.

The gas mixture leaving the quencher 130, that has a temperature of at most about 100°C, is led into the gas scrubber unit 135 provided by a wet gas scrubber apparatus. In the gas scrubber unit 135 the gas mixture is further cooled and its remaining contaminant-content is also removed. The cool and clean synthesis gas obtained by the cleaning leaves the gas scrubber unit 135 through the first outlet 135b1 thereof and reaches the compressor 152, wherein it is compressed and, optionally, liquefied. At the same time the wet sludge, which is the waste of the gas scrubber unit 135, is led through the second outlet 135b2 to the pump 136 that feeds it back to the waste feeder 25 for recycling/recovery. In order to achieve the planned composition of the end product(s), the operation of the feeders 121, 122, 123, 124 is preferably controlled upon analysis of the composition of the wet sludge.

The gas utilizing stage 150 is used for processing the cooled and cleaned synthesis gas exiting the gas scrubber unit 135; preferably, said synthesis gas is used in this stage to produce electric power. From the output of the gas utilizing stage, the electric power thus produced can be used to operate the plasma reactor 10 through being supplied back to the plasma torches 16, 17, 18 (see Figure 2A) That is, it can be used, at least partially, as power source for the plasma torches, thus the waste processing system 100 according to the invention is operable in a more economical way. The gas utilization stage 150 comprises substantially a compressor 152 for compressing synthesis gas, a gas distributor 154 for distributing the compressed synthesis gas, at least two synthesis gas reservoirs 160, 160' providing alternate operation, a gas motor 167 or turbine and an electric generator 169, wherein the outlet of the compressor 152 is connected to the inlet of the gas distributor 154, the outlets of the gas distributor 154 are respectively connected via suitably controlled input valves 161, 161' to the inlet of the reservoir 160 and the inlet of the reservoir 160', and the outlets of the reservoirs 160, 160' are connected via output valves 162, 162' to the input unit 165 of the gas motor 167 or gas turbine that is also equipped with a gas quality checking unit. To produce electric power by combusting the synthesis gas, the gas motor 167 or gas turbine is connected to an electric generator 169 in a manner known to a person skilled in the art. The electric generator 169 is preferably provided by an alternating current generator, preferably a three phase generator. In order to ensure steady operation of the system 100, the reservoirs 160, 160' may suitably be connected to an external natural gas source 171; thus electric power generation performed by the gas utilizing stage 150 becomes continuous even if the stages 110, 120 are shut down for e.g. cleaning or mechanical inspection.

### Summary:

When treating different waste materials by plasma reactors and converting them into the predefined (planned) end product(s), there is a need for taking place/performing simultaneously several different processes due to the complexity of waste materials fed into the reaction volume of the plasma reactor. If these processes undergo practically one after the other, the conversion is not feasible energetically. Accordingly, it is preferred to carry out these processes within the reaction volume simultaneously, while controlling the course thereof in real time by continuously monitoring various physical/chemical parameters in the reaction volume. Said controlling takes place by means of varying the supplies of additive substance of the different kinds of plasma torches used simultaneously in the reaction volume. In this way, the mutual relative ratio of the various processes to convert the waste materials becomes also controllable (i.e. the different conversion processes can be made to 'compete' with each other), which facilitates the conversion of the waste materials fed into the plasma reactor into the actually desired end product(s). According to the invention, when varying the supplies of additive substance of the plasma torches, the amount of additive substances added/mixed to the arc forming material of the different types of plasma torches is changed based on the data obtained by real-time measurement of physical/chemical parameters prevailing within the reaction volume.

Accordingly, due to the application of uniform and constantly high temperature reaction zones that are heated with suitably chosen plasma burners within a reaction volume having relatively small physical dimensions, the present invention primarily provides a plasma reactor that can be widely used, without claiming completeness, along with low energy input and high energy recuperation level in the following fields:
- recovery of the metal content of mostly inorganic powder-like or sludge-like wastes (such as e.g. metallurgical flying dust, ashes of incinerator plants or power plants, red mud, ore processing wastes, galvanic sludges) (i.e. the treatment of metal-containing industrial wastes);
- processing and disposal of mostly organic solid and liquid wastes (such as organic solvents, chemical and medicine residues, plastic wastes, biomass, municipal wastes);
- processing of used electronic components (e.g. printed circuit boards) and parallel recovery of their rare earth metal content while disposing the highly hazardous byproducts (e.g. dioxins, furans, polybrominated organic compounds and polycyclic aromatic hydrocarbons) created in said processing;
- decomposition of organic compounds and recovery of heavy metals without polluting the environment;
- disposal of hazardous organic wastes comprising halogenated hydrocarbons;
- processing of pyrolysis residues of plastic and rubber wastes.

A further distinctive application field of the method and system based on the plasma reactor according to the invention is the common treatment of refuse dumps, acidic pit water sludges and plant residues with high heavy metal content, that occur typically at the same geographical location. Presently, these wastes unavoidably contaminate the environmental water resources. However, the waste processing and recovering system and method according to the invention make it possible to eliminate the environmental pollution on the long term in a devised manner, and even totally and permanently. Operation of the system may be made feasible by extracting metals and other useful materials from refuse dumps along with e.g. slag wool thermal insulation production.

In the method according to the invention, addition of the reagent and alloying materials to the waste materials under processing is performed in a controlled manner, based on gas analysis carried out from time to time at multiple points of the aforementioned technological process. In this way, the production of end product(s) with predefined composition may be ensured while nearly 100% of the waste input gets recycled.

Since the plasma reactors according to the invention operate with plasma torches using preferably CO₂ or water vapor as the working medium as opposed to well-spread plasma reactors that operate with plasma torches comprising air as the working medium, here substantially no NOₓ production occurs. Moreover, as air introduction into the plasma reactor according to the invention through other means is also prevented or reduced to a minimal amount, there is practically no need for e.g. NOₓ-trapping when cleaning of flue gases produced as final gases takes place.

## Claims

1. A plasma reactor (10) to convert waste material by thermal plasma into one or more desired end products, comprising
- a reaction volume (5) delimited by walling (14), a gas outlet port (19) and a melt treatment unit (13), wherein said gas outlet port (19) delimits the reaction volume (5) from the top and said melt treatment unit (13) delimits the reaction volume (5) from the bottom, and wherein - when the plasma reactor (10) is in operation - the reaction volume (5) is connected to both the gas outlet port (19) and the melt treatment unit (13) to maintain a free flow of material there through, and wherein the reaction volume (5) includes a gaseous material treatment region (5C), a gasification region (5B) and a melt treatment region (5A), the gaseous material treatment region opens directly to the gas outlet port (19), the melt treatment region (5A) at least partially forms part of the melt treatment unit (13) and the gasification region (5B) is located between the gaseous material treatment region (5C) and the melt treatment region (5A);
- a waste material supply mechanism passing through the walling (14) and opening into the gasification region (5B) of the reaction volume (5);
- plasma torches arranged to generate thermal plasma in each of said regions (5A, 5B, 5C) of the reaction volume (5) separately, wherein at least one plasma torch is provided for generating the thermal plasma in each region (5A, 5B, 5C);
- sensors (11, 11') arranged in said regions (5A, 5B, 5C) of the reaction volume (5), the sensors (11, 11') are configured to monitor physical and/or chemical conditions prevailing within said regions (5A, 5B, 5C) and to measure physical/chemical parameters representative of said conditions at given instances when the plasma reactor (10) is in operation;
- a data collecting and control unit, wherein said sensors (11, 11') are in data communication connection with the data collecting and control unit for transferring measurement data obtained by measurements performed by the sensors, the measurement date being representative of the instantaneous physical and/or chemical conditions prevailing within said regions (5A, 5B, 5C) when the plasma reactor (10) is in operation;
wherein each plasma torch comprises an arc forming material supply inlet (D) for introducing arc forming material into the reaction volume (5) and an additive supply inlet (C) for introducing additive into the reaction volume (5), wherein the additive is provided by a substance that is necessary for the conversion of the waste material into the one or more desired end products, and wherein at least some of said additive supply inlets (C) is configured to allow real-time control of feeding of said substance into the thermal plasma in the reaction volume (5) by the respective plasma torch upon a control signal produced and outputted by the data collecting and control unit based on the measurement data of said sensors (11, 11') and preset operational parameters for the operation of the plasma reactor (10).

2. The plasma reactor (10) according to claim 1, wherein the surface of the walling (14) delimiting and contacting the reaction volume (5) is substantially featureless and of cylindrical symmetry.

3. The plasma reactor (10) according to claim 1 or 2, wherein the plasma torches for generating thermal plasma in different regions of the reaction volume (5) differ from each other in at least one parameter thereof, said parameter being selected from a group consisting of the mode of energization, the mode of arc forming and the material used for arc forming.

4. The plasma reactor (10) according to any one of claims 1 to 3, wherein the plasma torches for generating thermal plasma in a given region of the reaction volume (5) are identical regarding the mode of energization, the mode of arc forming and the material used for arc forming.

5. The plasma reactor (10) according to claim 4, wherein the plasma torches are arranged substantially in the same planar section of the reaction volume (5) perpendicular to the walling (14).

6. The plasma reactor (10) according to any one of claims 1 to 5, wherein the waste material supply mechanism is located symmetrically in relation to the at least one plasma torch that is arranged on the walling (14) in the gasification region (5B) of the reaction volume (5).

7. The plasma reactor (10) according to any one of claims 1 to 6, wherein the waste material supply mechanism is configured to releasably receive a feeding mechanism (20), wherein said feeding mechanism (20) is provided as a part of a waste feeder (25) to continuously supply waste material into said plasma reactor (10).

8. The plasma reactor (10) according to claim 7, wherein the waste material supply mechanism is formed as a hole (15d) in the walling (14), and attaching the feeding mechanism (20) to the waste material supply mechanism is provided by a conical fitting element (15) that can be form-fitted into the hole (15d) forming said waste material supply mechanism, wherein said fitting element (15) expanding towards the reaction volume (5) in a tapered manner.

9. The plasma reactor (10) according to any one of claims 1 to 8, wherein the instantaneous physical and/or chemical condition prevailing within the plasma reactor (10) is selected from a group consisting of pressure, temperature, gas composition, carbon monoxide level and carbon dioxide level.

10. The plasma reactor (10) according to any one of claims 1 to 9, wherein the waste material supply mechanism is configured to control the feeding, preferably the rate of feeding of the waste material into the reaction volume (5) upon a control signal that is generated and outputted by the data collecting and control unit based on measurement data provided by the sensors (11, 11') and preset operational parameters for the operation of the plasma reactor (10).

11. The plasma reactor (10) according to any one of claims 1 to 10, wherein the plasma torches are configured to control the power output supplied thereby into the reaction volume (5) upon a control signal that is generated and outputted by the data collecting and control unit based on measurement data provided by the sensors (11, 11') and preset operational parameters for the operation of the plasma reactor (10).

12. The plasma reactor (10) according to any one of claims 1 to 11, wherein the melt treatment unit (13) comprises a port (13b) for tapping molten metal and a port (13c) for tapping slag, said slag tapping port (13c) - when the plasma reactor (10) operates - is located under the port (13b) for tapping molten metal, wherein the slag tapping port (13c) is configured to releasably receive a melt spinning machine.

13. The plasma reactor (10) according to any one of claims 1 to 12, wherein the additive is selected from a group consisting of sodium, air, gaseous oxygen and water vapor.

14. A waste processing system to convert waste material by the application of thermal plasma into one or more desired end products, the system comprising at least one plasma reactor according to any one of claims 1 to 13 for treating the waste material by said thermal plasma.

15. A waste processing method to convert waste material by thermal plasma into one or more desired end products, said method comprising the steps of
- providing a plasma reactor according to any one of claims 1 to 13 to convert the waste material by thermal plasma, said plasma reactor enclosing a reaction volume, wherein at least one sensor is arranged at least at one location of said reaction volume, the at least one sensor is configured to monitor physical and/or chemical conditions prevailing within the reaction volume and to measure physical/chemical parameters representative of said conditions at given instances when the plasma reactor is in operation;
- generating and maintaining thermal plasma in the reaction volume by at least two plasma torches;
- feeding the waste material into the reaction volume and converting said waste material by thermal plasma treatment to the one or more desired end products, wherein
introducing an additive into the reaction volume at least during the thermal plasma treatment, said additive being a substance necessary for the conversion of the waste material into the one or more desired end products;
during said thermal plasma treatment, by the at least one sensor, generating measurement data representative of the physical and/or chemical conditions prevailing within the reaction volume;
transferring the thus obtained measurement data from the at least one sensor to a data collecting and control unit associated with the plasma reactor;
by comparing the obtained measurement data with preset operation parameters for the operation of the plasma reactor, generating a control signal by the data collecting and control unit;
by making use of the thus obtained control signal, performing a real-time control on the introduction of said additive into the reaction volume.

## Patentansprüche

1. Plasmareaktor (10) zur Umwandlung von Abfallmaterial zu einem oder mehreren gewünschten Endprodukten durch thermisches Plasma, umfassend
- ein Reaktionsvolumen (5), das durch eine Wandung (14), eine Gasauslassöffnung (19) und eine Schmelzenbehandlungseinheit (13) begrenzt ist, wobei die Gasauslassöffnung (19) das Reaktionsvolumen (5) von der Oberseite begrenzt und die Schmelzenbehandlungseinheit (13) das Reaktionsvolumen (5) von der Unterseite abgrenzt, und wobei - wenn der Plasmareaktor (10) in Betrieb ist - das Reaktionsvolumen (5) sowohl mit der Gasauslassöffnung (19) als auch mit der Schmelzenbehandlungseinheit (13) verbunden ist, um einen freien Materialfluss durch dieses aufrechtzuerhalten, und wobei das Reaktionsvolumen (5) einen Behandlungsbereich für gasförmiges Material (5C), einen Vergasungsbereich (5B) und einen Schmelzenbehandlungsbereich (5A) beinhaltet, wobei der Behandlungsbereich für gasförmiges Material direkt in die Gasauslassöffnung (19) mündet, der Schmelzenbehandlungsbereich (5A) zumindest teilweise einen Teil der Schmelzenbehandlungseinheit (13) bildet und der Vergasungsbereich (5B) sich zwischen dem Behandlungsbereich für gasförmiges Material (5C) und dem Schmelzenbehandlungsbereich (5A) befindet;
- einen Abfallmaterialzufuhrmechanismus, der durch die Wandung (14) verläuft und in den Vergasungsbereich (5B) des Reaktionsvolumens (5) mündet;
- Plasmabrenner, die angeordnet sind, um separat in jedem der Bereiche (5A, 5B, 5C) des Reaktionsvolumens (5) thermisches Plasma zu erzeugen, wobei in jedem Bereich (5A, 5B, 5C) mindestens ein Plasmabrenner zum Erzeugen des thermischen Plasmas bereitgestellt ist;
- Sensoren (11, 11'), die in den Bereichen (5A, 5B, 5C) des Reaktionsvolumens (5) angeordnet sind, wobei die Sensoren (11, 11') konfiguriert sind, um innerhalb der Bereiche (5A, 5B, 5C) herrschende physikalische und/oder chemische Bedingungen zu überwachen und um physikalische/chemische Parameter zu messen, die für die Bedingungen in vorgegebenen Fällen, wenn der Plasmareaktor (10) in Betrieb ist, repräsentativ sind;
- eine Datensammel- und Steuereinheit, wobei die Sensoren (11, 11') in Datenkommunikationsverbindung mit der Datensammel- und Steuereinheit stehen, um Messdaten zu übertragen, die durch von den Sensoren durchgeführten Messungen erhalten wurden, wobei die Messdatum repräsentativ für die momentanen physikalischen und/oder chemischen Bedingungen sind, die in den Bereichen (5A, 5B, 5C) herrschen, wenn der Plasmareaktor (10) in Betrieb ist;
wobei jeder Plasmabrenner einen Lichtbogen bildenden Materialzufuhreinlass (D) zum Einführen von Lichtbogen bildendem Material in das Reaktionsvolumen (5) und einen Zusatzstoffzufuhreinlass (C) zum Einführen von Zusatzstoff in das Reaktionsvolumen (5) umfasst, wobei der Zusatzstoff durch eine Substanz bereitgestellt wird, die für die Umwandlung des Abfallmaterials zu dem einen oder den mehreren gewünschten Endprodukten erforderlich ist, und wobei zumindest einige der Zusatzstoffzufuhreinlässe (C) konfiguriert sind, um eine Echtzeitsteuerung der Zufuhr der Substanz in das thermische Plasma in dem Reaktionsvolumen (5) durch den jeweiligen Plasmabrenner auf ein Steuersignal hin zu ermöglichen, das basierend auf den Messdaten der Sensoren (11, 11') und voreingestellten Betriebsparametern für den Betrieb des Plasmareaktors (10) von der Datensammel- und Steuereinheit erzeugt und ausgegeben wird.

2. Plasmareaktor (10) nach Anspruch 1, wobei die Oberfläche der Wandung (14), die das Reaktionsvolumen (5) begrenzent und mit ihm in Kontakt steht, im Wesentlichen ohne Merkmale und von zylindrischer Symmetrie ist.

3. Plasmareaktor (10) nach Anspruch 1 oder 2, wobei sich die Plasmabrenner zum Erzeugen von thermischem Plasma in verschiedenen Bereichen des Reaktionsvolumens (5) in mindestens einem ihrer Parameter voneinander unterscheiden, wobei der Parameter ausgewählt ist aus einer Gruppe bestehend aus der Energieversorgungsart, der Lichtbogenbildungsart und dem zur Lichtbogenbildung verwendeten Material.

4. Plasmareaktor (10) nach einem der Ansprüche 1 bis 3, wobei die Plasmabrenner zum Erzeugen von thermischem Plasma in einem vorgegebenen Bereich des Reaktionsvolumens (5) hinsichtlich der Energieversorgungsart, der Lichtbogenbildungsart und dem zur Lichtbogenbildung verwendeten Material identisch sind.

5. Plasmareaktor (10) nach Anspruch 4, wobei die Plasmabrenner im Wesentlichen im gleichen planaren Abschnitt des Reaktionsvolumens (5) senkrecht zur Wandung (14) angeordnet sind.

6. Plasmareaktor (10) nach einem der Ansprüche 1 bis 5, wobei der Abfallmaterialzufuhrmechanismus in Bezug auf den mindestens einen Plasmabrenner symmetrisch angeordnet ist, der an der Wandung (14) in dem Vergasungsbereich (5B) des Reaktionsvolumens (5) angeordnet ist.

7. Plasmareaktor (10) nach einem der Ansprüche 1 bis 6, wobei der Abfallmaterialzufuhrmechanismus konfiguriert ist, um einen Zufuhrmechanismus (20) lösbar aufzunehmen, wobei der Zufuhrmechanismus (20) als Teil einer Abfallzuführvorrichtung (25) bereitgestellt ist, um dem Plasmareaktor (10) kontinuierlich Abfallmaterial zu zuführen.

8. Plasmareaktor (10) nach Anspruch 7, wobei der Abfallmaterialzufuhrmechanismus als ein Loch (15d) in der Wandung (14) ausgebildet ist und ein Anbringen des Zufuhrmechanismus (20) an dem Abfallmaterialzufuhrmechanismus durch ein konisches Passelement (15) bereitgestellt wird, das formschlüssig in das Loch (15d) eingepasst werden kann, das den Abfallmaterialzufuhrmechanismus bildet, wobei sich das Passelement (15) zum Reaktionsvolumen (5) hin auf verjüngte Weise ausdehnt.

9. Plasmareaktor (10) nach einem der Ansprüche 1 bis 8, wobei die im Plasmareaktor (10) herrschende momentane physikalische und/oder chemische Bedingung ausgewählt ist aus einer Gruppe bestehend aus Druck, Temperatur, Gaszusammensetzung, Kohlenmonoxidgehalt und Kohlendioxidgehalt.

10. Plasmareaktor (10) nach einem der Ansprüche 1 bis 9, wobei der Abfallmaterialzufuhrmechanismus konfiguriert ist, um die Zufuhr, vorzugsweise die Zufuhrrate des Abfallmaterials in das Reaktionsvolumen (5) auf ein Steuersignal hin zu steuern, das basierend auf von den Sensoren (11, 11') bereitgestellten Messdaten und voreingestellten Betriebsparametern für den Betrieb des Plasmareaktors (10) von der Datensammel- und Steuereinheit erzeugt und ausgegeben wird.

11. Plasmareaktor (10) nach einem der Ansprüche 1 bis 10, wobei die Plasmabrenner konfiguriert sind, um die von ihnen dem Reaktionsvolumen (5) zugeführte Energieabgabe auf ein Steuersignal hin zu steuern, das basierend auf von den Sensoren (11, 11') bereitgestellten Messdaten und voreingestellten Betriebsparametern für den Betrieb des Plasmareaktors (10) von der Datensammel- und Steuereinheit erzeugt und ausgegeben wird.

12. Plasmareaktor (10) nach einem der Ansprüche 1 bis 11, wobei die Schmelzenbehandlungseinheit (13) eine Öffnung (13b) zum Abziehen von geschmolzenem Metall und eine Öffnung (13c) zum Abziehen von Schlacke umfasst, wobei sich die Schlackenabzugsöffnung (13c) - wenn der Plasmareaktor (10) läuft - unter der Öffnung (13b) zum Abziehen von geschmolzenem Metall befindet, wobei die Schlackenabzugsöffnung (13c) zum lösbaren Aufnehmen einer Schmelzspinnmaschine konfiguriert ist.

13. Plasmareaktor (10) nach einem der Ansprüche 1 bis 12, wobei der Zusatzstoff ausgewählt ist aus einer Gruppe bestehend aus Natrium, Luft, gasförmigem Sauerstoff und Wasserdampf.

14. Abfallverarbeitungssystem zum Umwandeln von Abfallmaterial zu einem oder mehreren gewünschten Endprodukten durch Anwendung von thermischem Plasma, wobei das System mindestens einen Plasmareaktor nach einem der Ansprüche 1 bis 13 zum Behandeln des Abfallmaterials durch das thermische Plasma umfasst.

15. Abfallverarbeitungsverfahren zum Umwandeln von Abfallmaterial zu einem oder mehreren gewünschten Endprodukten durch thermisches Plasma, wobei das Verfahren die Schritte umfasst
- Bereitstellen eines Plasmareaktors nach einem der Ansprüche 1 bis 13 zur Umwandlung des Abfallmaterials durch thermisches Plasma, wobei der Plasmareaktor ein Reaktionsvolumen umgibt, in dem mindestens ein Sensor an mindestens einer Stelle des Reaktionsvolumens angeordnet ist, wobei der mindestens eine Sensor konfiguriert ist, um innerhalb des Reaktionsvolumens herrschende physikalische und/oder chemische Bedingungen zu überwachen und physikalische/chemische Parameter zu messen, die für die Bedingungen in vorgegebenen Fällen, wenn der Plasmareaktor in Betrieb ist, repräsentativ sind;
- Erzeugen und Aufrechterhalten von thermischem Plasma in dem Reaktionsvolumen durch mindestens zwei Plasmabrenner;
- Zuführen des Abfallmaterials dem Reaktionsvolumen und Umwandeln des Abfallmaterials zu dem einen oder den mehreren gewünschten Endprodukten durch thermische Plasmabehandlung, wobei
ein Zusatzstoff in das Reaktionsvolumen zumindest während der thermischen Plasmabehandlung eingeführt wird, wobei der Zusatzstoff eine Substanz ist, die für die Umwandlung des Abfallmaterials zu dem einen oder den mehreren gewünschten Endprodukten erforderlich ist;
während der thermischen Plasmabehandlung durch den mindestens einen Sensor Messdaten erzeugt werden, die für die innerhalb des Reaktionsvolumens herrschenden physikalischen und/oder chemischen Bedingungen repräsentativ sind;
die so erhaltenen Messdaten von dem mindestens einen Sensor an eine Datensammel- und Steuereinheit übertragen werden, die dem Plasmareaktor zugeordnet ist;
durch Vergleichen der erhaltenen Messdaten mit voreingestellten Betriebsparametern für den Betrieb des Plasmareaktors durch die Datensammel- und Steuereinheit ein Steuersignal erzeugt wird;
durch Verwenden des so erhaltenen Steuersignals eine Echtzeitsteuerung der Einführung des Zusatzstoffs in das Reaktionsvolumen durchgeführt wird.

## Revendications

1. Réacteur à plasma (10) permettant de convertir des déchets par plasma thermique en un ou plusieurs produits finaux souhaités, comprenant
- un volume de réaction (5) délimité par une cloison (14), un orifice de sortie de gaz (19) et une unité de traitement de matière en fusion (13), dans lequel ledit orifice de sortie de gaz (19) délimite le volume de réaction (5) du sommet et ladite unité de traitement de matière en fusion (13) délimite le volume de réaction (5) du fond, et dans lequel, lorsque le réacteur à plasma (10) est en fonctionnement, le volume de réaction (5) est raccordé à la fois à l'orifice de sortie de gaz (19) et à l'unité de traitement de matière en fusion (13) pour maintenir un écoulement libre de matière à travers celui-ci, et dans lequel le volume de réaction (5) inclut une région de traitement de matière gazeuse (5C), une région de gazéification (5B), et une région de traitement de matière en fusion (5A), la région de traitement de matière gazeuse s'ouvre directement à l'orifice de sortie de gaz (19), la région de traitement de matière en fusion (5A) forme au moins partiellement une partie de l'unité de traitement de matière en fusion (13) et la région de gazéification (5B) est située entre la région de traitement de matière gazeuse (5C) et la région de traitement de matière en fusion (5A) ;
- un mécanisme d'alimentation de déchets passant à travers la cloison (14) et s'ouvrant dans la région de gazéification (5B) du volume de réaction (5) ;
- des torches à plasma agencées pour générer un plasma thermique séparément dans chacune desdites régions (5A, 5B, 5C) du volume de réaction (5), dans lequel au moins une torche à plasma est prévue pour générer le plasma thermique dans chaque région (5A, 5B, 5C) ;
- des capteurs (11, 11') agencés dans lesdites régions (5A, 5B, 5C) du volume de réaction (5), les capteurs (11, 11') sont configurés pour surveiller des conditions physiques et/ou chimiques prévalant à l'intérieur desdites régions (5A, 5B, 5C) et pour mesurer des paramètres physiques/chimiques représentatifs desdites conditions à des instances données lorsque le réacteur à plasma (10) est en fonctionnement ;
- une unité de recueil de données et de commande, dans lequel lesdits capteurs (11, 11') sont en connexion de communication de données avec l'unité de recueil de données et de commande pour transférer des données de mesure obtenues par des mesures effectuées par les capteurs, la date de mesure étant représentative des conditions physiques et/ou chimiques instantanées prévalant à l'intérieur desdites régions (5A, 5B, 5C) lorsque le réacteur à plasma (10) est en fonctionnement ;
dans lequel chaque torche à plasma comprend une entrée d'alimentation de matière de formation d'arc (D) pour introduire une matière de formation d'arc dans le volume de réaction (5) et une entrée d'alimentation d'additif (C) pour introduire un additif dans le volume de réaction (5), dans lequel l'additif est fourni par une substance qui est nécessaire pour la conversion des déchets dans les un ou plusieurs produits finaux souhaités, et dans lequel au moins certaines desdites entrées d'alimentation d'additif (C) sont configurées pour permettre une commande en temps réel de l'approvisionnement de ladite substance dans le plasma thermique dans le volume de réaction (5) par la torche à plasma respective lors d'un signal de commande produit et délivré par l'unité de recueil de données et de commande sur la base des données de mesure desdits capteurs (11, 11') et de paramètres opérationnels préréglés pour le fonctionnement du réacteur à plasma (10).

2. Réacteur à plasma (10) selon la revendication 1, dans lequel la surface de la cloison (14) délimitant et touchant le volume de réaction (5) est sensiblement de symétrie cylindrique et dépourvue de caractéristique.

3. Réacteur à plasma (10) selon la revendication 1 ou 2, dans lequel les torches à plasma permettant de générer un plasma thermique dans différentes régions du volume de réaction (5) sont différentes l'une de l'autre en ce qui concerne au moins un paramètre de celles-ci, ledit paramètre étant sélectionné dans un groupe se composant du mode de mise sous tension, du mode de formation d'arc et de la matière utilisée pour la formation d'arc.

4. Réacteur à plasma (10) selon l'une quelconque des revendications 1 à 3, dans lequel les torches à plasma permettant de générer un plasma thermique dans une région donnée du volume de réaction (5) sont identiques en ce qui concerne le mode de mise sous tension, le mode de formation d'arc et la matière utilisée pour la formation d'arc.

5. Réacteur à plasma (10) selon la revendication 4, dans lequel les torches à plasma sont agencées sensiblement dans la même section plane du volume de réaction (5) perpendiculaire à la cloison (14).

6. Réacteur à plasma (10) selon l'une quelconque des revendications 1 à 5, dans lequel le mécanisme d'alimentation de déchets est situé symétriquement par rapport à l'au moins une torche à plasma qui est agencée sur la cloison (14) dans la région de gazéification (5B) du volume de réaction (5).

7. Réacteur à plasma (10) selon l'une quelconque des revendications 1 à 6, dans lequel le mécanisme d'alimentation de déchets est configuré pour recevoir, de manière libérable, un mécanisme d'approvisionnement (20), dans lequel ledit mécanisme d'approvisionnement (20) est prévu en tant qu'une partie d'un chargeur de déchets (25) permettant l'approvisionnement continu de déchets dans ledit réacteur à plasma (10).

8. Réacteur à plasma (10) selon la revendication 7, dans lequel le mécanisme d'alimentation de déchets est formé en tant qu'un trou (15d) dans la cloison (14), et l'attachement du mécanisme d'approvisionnement (20) au mécanisme d'alimentation de déchets est prévu par un élément d'ajustement conique (15) dont la forme peut être ajustée dans le trou (15d) formant ledit mécanisme d'approvisionnement de déchets, dans lequel ledit élément d'ajustement (15) est en expansion vers le volume de réaction (5) d'une manière effilée.

9. Réacteur à plasma (10) selon l'une quelconque des revendications 1 à 8, dans lequel la condition physique et/ou chimique instantanée prévalant à l'intérieur du réacteur à plasma (10) est sélectionnée dans un groupe se composant d'une pression, une température, une composition de gaz, un niveau de monoxyde de carbone et un niveau de dioxyde de carbone.

10. Réacteur à plasma (10) selon l'une quelconque des revendications 1 à 9, dans lequel le mécanisme d'alimentation de déchets est configuré pour commander l'approvisionnement, de préférence le débit d'approvisionnement des déchets dans le volume de réaction (5) lors d'un signal de commande qui est généré et délivré par l'unité de recueil de données et de commande sur la base de données de mesure fournies par les capteurs (11, 11') et de paramètres opérationnels préréglés pour le fonctionnement du réacteur à plasma (10).

11. Réacteur à plasma (10) selon l'une quelconque des revendications 1 à 10, dans lequel les torches à plasma sont configurées pour commander la sortie de puissance fournie de ce fait dans le volume de réaction (5) lors d'un signal de commande qui est généré et délivré par l'unité de recueil de données et de commande sur la base de données de mesure fournies par les capteurs (11, 11') et de paramètres opérationnels préréglés pour le fonctionnement du réacteur à plasma (10).

12. Réacteur à plasma (10) selon l'une quelconque des revendications 1 à 11, dans lequel l'unité de traitement de matière en fusion (13) comprend un orifice (13b) permettant de soutirer un métal en fusion et un orifice (13c) permettant de soutirer des scories, ledit orifice de soutirage de scories (13c), lorsque le réacteur à plasma (10) est en fonctionnement, est situé au-dessous de l'orifice (13b) de soutirage de métal en fusion, dans lequel l'orifice de soutirage de scories (13c) est configuré pour recevoir, de manière libérable, une machine de filage en fusion.

13. Réacteur à plasma (10) selon l'une quelconque des revendications 1 à 12, dans lequel l'additif est sélectionné dans un groupe se composant de sodium, air, oxygène gazeux et vapeur d'eau.

14. Système de traitement de déchets permettant de convertir des déchets par l'application d'un plasma thermique dans un ou plusieurs produits finaux souhaités, le système comprenant au moins un réacteur à plasma selon l'une quelconque des revendications 1 à 13 permettant de traiter les déchets par ledit plasma thermique.

15. Procédé de traitement de déchets permettant de convertir des déchets par plasma thermique en un ou plusieurs produits finaux souhaités, ledit procédé comprenant les étapes de
- la fourniture d'un réacteur à plasma selon l'une quelconque des revendications 1 à 13 permettant de convertir les déchets par plasma thermique, ledit réacteur à plasma enfermant un volume de réaction, dans lequel au moins un capteur est agencé au moins à un emplacement dudit volume de réaction, l'au moins un capteur est configuré pour surveiller des conditions physiques et/ou chimiques prévalant à l'intérieur du volume de réaction et pour mesurer des paramètres physiques/chimiques représentatifs desdites conditions à des instances données lorsque le réacteur à plasma est en fonctionnement ;
- la génération et le maintien d'un plasma thermique dans le volume de réaction par au moins deux torches à plasma ;
- l'approvisionnement des déchets dans le volume de réaction et la conversion desdits déchets par traitement à plasma thermique dans les un ou plusieurs produits finaux souhaités, dans lequel le procédé comprend en outre :
l'introduction d'un additif dans le volume de réaction au moins au cours du traitement à plasma thermique, ledit additif étant une substance nécessaire pour la conversion des déchets dans les un ou plusieurs produits finaux souhaités ;
au cours dudit traitement à plasma thermique, par l'au moins un capteur, la génération de données de mesure représentatives des conditions physiques et/ou chimiques prévalant à l'intérieur du volume de réaction ;
le transfert des données de mesure ainsi obtenues de l'au moins un capteur à une unité de recueil de données et de commande associée au réacteur à plasma ;
par la comparaison des données de mesure obtenues à des paramètres de fonctionnement préréglés pour le fonctionnement du réacteur à plasma, la génération d'un signal de commande par l'unité de recueil de données et de commande ;
par l'utilisation du signal de commande ainsi obtenu, l'exécution d'une commande en temps réel à l'introduction dudit additif dans le volume de réaction.
